# EUROPEAN PATENT SPECIFICATION

(11) **EP 0 590 948 B1**
(45) Date of publication and mention of the grant of the patent: **02.04.1997**
(21) Application number: 93307706.7
(22) Date of filing: 29.09.1993
(51) Int. Cl.: C04B 40/00, C04B 24/28, C04B 28/02, E04C 5/07, E04C 3/29, B28B 7/34

(54) **Cement including composite material, cement products, molding material, a concrete member and a method of producing the same**
Zement enthaltendes Verbundmaterial, Zementprodukte, Formmasse, Betonbauelement und deren Herstellungsverfahren
Matériau composite contenant du ciment, produits cimenteux, matériau de moulage, élément en beton et procédé de leur fabrication

(30) Priority: 29.09.1992 JP 301514/92; 21.12.1992 JP 361899/92; 28.06.1993 JP 210816/93; 28.06.1993 JP 210815/93
(43) Date of publication of application: 06.04.1994
(73) Proprietor: MAETA CONCRETE INDUSTRY LTD., Sakati-Shi, Yamagata-Ken (JP)
(72) Inventor: Kobayashi, Tadashi, c/o Maeta Concrete Ind., Ltd., Sakati-shi, Yamagata-ken (JP); Pushpalal, Game Kankanamge Dinilprem, Sakata-shi, Yamagata-ken (JP); Hasegawa, Masaki, c/o Maeta Concrete Ind. Ltd., Sakati-shi, Yamagata-ken (JP)
(74) Representative: Sturt, Clifford Mark

(56) References cited:
- DE-A- 3 105 459
- FR-A- 721 548
- FR-A- 1 296 929
- FR-A- 2 354 866
- GB-A- 260 653
- US-A- 2 328 290
- US-A- 3 677 994

## Description

This invention relates to improvement on cement including composite material, products thereof, and moulding material having higher physical strength, more excellent thermal resistance and water resistance and a method for producing them.

This invention also relates to improvement on a concrete member having higher physical strength, more excellent thermal resistance and water resistance and a method of producing the same.

There are known various organic or inorganic compounds available for moulding materials, adhesives, laminates and other materials used for various fields such as civil engineering and construction industries, transportation industries of cars or railroads, chemical industries, other general mechanical industries and so on.

Hydraulic cement has been generally used as mortar or concrete mainly in civil engineering and construction industries while it is combined with more than 25 weight % of water and aggregate is added thereto to produce cement products. The cement products have low flexural strength of 50 to 100 kgf/cm² (5 to 10 N/mm²) although they have high compressive strength and they conventionally have reinforcing bars used therein. In order to improve the flexural strength of the cement products, there are added short glass fibres or carbon fibres thereto. However, their flexural strength rarely exceeds 400 kgf/cm² (40 N/mm²).

In general, the cement products have higher physical strength as the amount of water used is lower, and also as the amount of blow-holes included therein is lower.

For example, Japanese Application Publication No. 43431/1984 discloses cement products having extremely higher flexural strength without any fibres included therein and without being moulded under high compressive pressure. These cement products can be produced by kneading hydraulic cement, water and water organic polymer with each other while high shearing force is applied thereto by a double roller mill so that sizes and rates of blow-holes in the cement products are limited.

The cement products disclosed in The Japanese Application Publication have higher flexural strength because it is cured by combining hydraulic cement with 7 to 30 % of water relative to hydraulic cement. However, the cement products having flexural strength improved disadvantageously have physical strength lowered when they are immersed in water and also have water resistance lowered due to their swelling when they are immersed in water because of the cement products including water organic polymer.

In order to improve water resistance of the cement products, Japanese Patent Application laying-Open No. 206342/1988 discloses cement products including isocyanate compound reacted with hydrophilic group of water organic polymer of the aforementioned cement products. Such isocyanate compound may be added to the components of the cement products before they are kneaded or while they are kneaded. Also, they may be impregnated with isocyanate compound after they are kneaded, but before they are cured or after they are cured.

However, such material has bad environment of operations such as kneading and moulding because isocyanate compound has strong irritating smell generated therefrom and also has virulence. Furthermore, urethane derivative which is main reactant produced by reacting isocyanate compound with hydrophilic group disadvantageously has lower thermal resistance.

Processes for the manufacture of materials comprising a cement and an organic thermosetting binder such as a formaldehyde resin precursor are also known. GB-260653 discloses a process for the manufacture of an insulating material from an incompletely condensed phenol-formaldehyde resin and cement. The water necessary for the combination with the cement is provided by the resin during the chemical changes taking place on subsequent heat treatment. GB-1581934 discloses a material essentially comprising a cement and a thermosetting resin such as a phenolic resin.

Formaldehyde has been used also for moulding materials, adhesives and laminates. Such moulding material including formaldehyde is obtained by combining formaldehyde resin precursor with filler such as wood flour, pulp, diatomaceous earth or the like, curing agent, lubricant, colouring agent and/or other additives, grinding and classifying them. In order to lower fragility of such moulding material and improve flexural strength thereof, there has been added thereto filler of fibres such as cotton fibres, flax fibres, glass fibres or the like.

Such moulding material is moulded by compression moulding, transfer moulding or injection moulding to produce mould goods. Such mould goods have flexural strength of 500 to 1000 kgf/cm² (50 to 100 N/mm²) unless there is used filler of fibre material such as glass fibres or flax fibres.

However, such moulding material of formaldehyde cannot have high flexural strength of more than 100 N/mm² without any filler of reinforcing fibres. If reinforcing fibres are added to formaldehyde, then the reinforcing fibres will be cut on producing the moulding material and they will be oriented on moulding it, which causes the mould goods to have the physical strength varied and an orientation provided thereto.

In addition thereto, since the moulding material has fluidity lowered due to the filled fibres, the moulding material disadvantageously fails to pervade all parts of the mould, which prevents the mould goods from having a smooth surface thereof.

Conventional concrete members have been manufactured by placing freshly mixed concrete in a mould of steel, wood or FRP even though they are provided in either of factories or working spots. It will be noted that they may be advantageously manufactured by using permanent moulds of precast concrete because such permanent moulds are integral to the concrete members and not required to be removed. If the permanent moulds are formed of concrete having high durability, then the entire concrete members will have durability improved. The concrete members may have reinforcing bars used therein.

However, conventional concrete placed in the mould of steel, wood or FRP has poor wear resistance and water tightness. Furthermore, the concrete members will have durability lowered due to rust of the reinforcing bars which is caused by chloride permeating the concrete members through fine crack or honeycomb therein which is in turn produced due to poor operation of the concrete construction or poor curing of concrete material therefor.

Although the property of concrete itself may be improved by adding admixtures such as fibres or silica fumes to concrete material, such improvement on the entire concrete members is undesirably expensive.

Although the entire concrete members are able to have their durability improved if the permanent moulds of precast concrete having high durability are used therefor, they still have no flexural strength improved.

Such permanent moulds of precast concrete are relatively thicker and heavier, which causes assemblies thereof to be troublesome. Of late, the concrete members are required to be relatively thinner and lighter.

Accordingly, it is a principal object of the invention to provide cement including composite material having higher flexural strength and more excellent water resistance and thermal resistance.

It is another object of the invention to provide cement products having higher physical strength such as flexural strength of more than 40 N/mm² and elastic modulus and more excellent thermal resistance and water resistance.

It is another object of the invention to provide moulding material including cement component and having higher physical strength such as flexural strength of more than 50 N/mm² and preferably of more than 100 N/mm² and higher elastic modulus and more excellent thermal resistance and water resistance.

It is a further object of the invention to provide an inexpensive concrete member having higher flexural strength and higher durability such as water tightness, chemical resistance and salt damage or weather resistance.

It is a further object of the invention to provide a method of producing a concrete member having higher flexural strength and higher durability such as water tightness, chemical resistance and salt damage or weather resistance.

In accordance with one aspect of the present invention, there is provided cement including composite material comprising;
at least one kind of hydraulic cement;
and polymer precursor substantially including no water, but generating water by curing reaction.

In this aspect, the polymer precursor may be blended with a ratio of 10 to 60 weight parts and preferably 12 to 30 weight parts relative to 100 weight parts of the hydraulic cement.

Also, in this aspect, the polymer precursor may be formaldehyde resin precursor such as phenol resin precursor, melamine resin precursor or urea resin precursor or polyimide resin precursor.

In accordance with another aspect of the invention, there is provided cement including composite material comprising;
at least one kind of hydraulic cement;
polymer precursor substantially including no water, but generating water by curing reaction;
and additive.

In this aspect, the additive may be preferably polyamide such as fatty alcohol soluble polyamide or polyacrylamide.

In those two aspects, there may be added filler such as fibre material thereto.

In this aspect, the polymer precursor may be blended with the same ratio as aforementioned, but the blend ratio is set while the hydraulic cement has filler included.

In accordance with a further aspect of the invention, there is provided cement product formed by curing cement including composite material comprising at least one kind of hydraulic cement and polymer precursor substantially including no water, but generating water by curing reaction.

In this aspect, the polymer precursor may be blended with the same ratio as aforementioned and may be added with additive and/or filler.

In accordance with a further aspect of the invention, there is provided moulding material comprising composite including;
at least one kind of hydraulic cement;
and polymer precursor substantially including no water, but generating water by curing reaction.

In this aspect, the polymer precursor may be blended with a ratio of 5 to 100 weight parts and preferably 7 to 60 weight parts relative to 100 weight parts of the hydraulic cement.

Also, in this aspect, the polymer precursor may be most preferably formaldehyde resin precursor such as phenol resin precursor, melamine resin precursor or urea resin precursor, but may be polyimide precursor. It should be noted that the blend ratio of polymer precursor is set while it has no alcohol solvent included.

In accordance with a further aspect of the invention, there is provided a method of producing moulding material comprising the step of mixing composite including at least one kind of hydraulic cement and polymer precursor substantially including no water, but generating water by curing reaction, said composite being in the form of powder.

In accordance with a further aspect of the invention, there is provided a method of producing moulding material comprising the step of mixing composite including at least one kind of hydraulic cement and polymer precursor substantially including no water, but generating water by curing reaction, said polymer precursor being in the thermal molten form.

In accordance with a further aspect of the invention, there is provided a method of producing moulding material comprising the step of mixing composite including at least one kind of hydraulic cement and polymer precursor substantially including no water, but generating water by curing reaction, said polymer precursor being in the thermal molten form and said composite being ground and classified.

In accordance with a further aspect of the invention, there is provided a method of producing moulding material comprising the step of mixing composite including at least one kind of hydraulic cement and polymer precursor substantially including no water, but generating water by curing reaction, said polymer precursor being in the form of alcohol solution of said polymer precursor.

In accordance with a further aspect of the invention, there is provided a method of producing moulding material comprising the step of mixing composite including at least one kind of hydraulic cement and polymer precursor substantially including no water, but generating water by curing reaction, said polymer precursor being in the form of alcohol solution of said polymer precursor and said composite being ground and classified after said alcohol is evaporated.

In these aspects of producing moulding material, the polymer precursor may be blended with a ratio of 5 to 100 weight parts and preferably 7 to 60 weight parts relative to 100 weight parts of the hydraulic cement.

Also, in these aspects, the polymer precursor may be most preferably formaldehyde resin precursor such as phenol resin precursor, melamine resin precursor or urea resin precursor, but may be polyimide precursor. It should be noted that the blend ratio of polymer precursor is set while it has no alcohol solvent included.

In accordance with another aspect of the invention, there are provided mould goods obtained by moulding, heating and curing moulding material comprising composite including at least one kind of hydraulic cement and polymer precursor substantially including no water, but generating water by curing reaction.

In this aspect, the composite may be in the form of powder. It may be in the thermally molten form of polymer precursor or in the thermally molten form of polymer precursor and ground and classified.

Otherwise, it may be in the form of alcohol solution of said polymer precursor or in the form of alcohol solution of polymer precursor and ground and classified.

Also, in this aspect, the polymer precursor may be blended with a ratio of 5 to 100 weight parts and preferably 7 to 60 weight parts relative to 100 weight parts of the hydraulic cement.

Furthermore, in this aspect, the polymer precursor may be most preferably formaldehyde resin precursor such as phenol resin precursor, melamine resin precursor or urea resin precursor, but may be polyimide precursor. It should be noted that the blend ratio of polymer precursor is set while it has no alcohol solvent included.

In accordance with another aspect of the invention, there is provided a concrete member comprising a concrete body and at least one reinforcing body integrally provided with said concrete body, said reinforcing body comprising composite including at least one kind of hydraulic cement and polymer precursor substantially including no water, but generating water by curing reaction.

In this aspect, the reinforcing body may be attached to the concrete body or buried in the concrete body.

Also, in this aspect, the polymer precursor may be blended with a ratio of 5 to 100 weight parts relative to 100 weight parts of the hydraulic cement.

Furthermore, in this aspect, the polymer precursor may be most preferably formaldehyde resin precursor such as phenol resin precursor, melamine resin precursor or urea resin precursor, but may be polyimide precursor. It should be noted that the blend ratio of polymer precursor is set while it has no alcohol solvent included.

In accordance with a further aspect of the invention, there is provided a method of producing a concrete member comprising the steps of;
forming at least one reinforcing body comprising composite including at least one kind of hydraulic cement and polymer precursor substantially including no water, but generating water by curing reaction;
placing said reinforcing body in a mould;
and placing and curing freshly mixed concrete in said mould to form said concrete member with said reinforcing body integrally provided.

In accordance with a further aspect of the invention, there is provided a method of producing a concrete member comprising the steps of;
forming at least one reinforcing body comprising composite including at least one kind of hydraulic cement and polymer precursor substantially including no water, but generating water by curing reaction;
assembling a permanent mould of said reinforcing body;
and placing and curing freshly mixed concrete in said permanent mould to form said concrete member with said reinforcing body integrally provided.

In accordance with a further aspect of the invention, there is provided a method of producing a concrete member comprising the steps of;
forming a concrete body;
forming at least one reinforcing body comprising composite including at least one kind of hydraulic cement and polymer precursor substantially including no water, but generating water by curing reaction;
adhering said reinforcing body to said concrete body by adhesive to form said concrete member.

In these aspects of producing a concrete member, the polymer precursor may be blended with a ratio of 5 to 100 weight parts relative to 100 weight parts of the hydraulic cement.

Furthermore, in these aspects, the polymer precursor may be most preferably formaldehyde resin precursor such as phenol resin precursor, melamine resin precursor or urea resin precursor, but may be polyimide precursor.

The above and other objects and features of the invention will be apparent from the description of the embodiments of the invention taken along without or with the accompanying drawings in which;
Fig. 1 is a perspective view of a concrete member constructed in accordance with one embodiment of the invention;
Fig. 2 is a cross sectional view of a concrete member together with a mould in which the concrete member is formed in accordance with one method of the invention;
Fig. 3 is a cross sectional view of a concrete member constructed in accordance with another embodiment of the invention;
Fig. 4 is a cross sectional view of a concrete member together with a permanent mould in which the concrete member is integrally formed in accordance with another method of the invention;
and Fig. 5 is a cross sectional view of a concrete member together with a mould in which the concrete member is formed in accordance with further method of the invention.

As aforementioned, the invention provides cement including composite material comprising at least one kind of hydraulic cement and polymer precursor substantially including no water, but generating water by curing reaction.

As the cement including composite material comprises polymer precursor substantially including no water, but generating water by curing reaction, water generated by curing reaction hydrates with hydraulic cement. This causes higher physical strength such as flexural strength and more excellent water resistance and thermal resistance to be provided to the composite material.

Hydraulic cement used in the invention may be of conventional cement such as Portland cement (normal Portland cement, high early strength Portland cement or moderate Portland cement, for example), blended cement (Portland blast furnace cement, silica cement or fly-ash cement, for example), special cement (aluminous cement or oil well cement, for example) and various gypsum. One or more than two kinds of hydraulic cement can be used.

Polymer precursor cured while generating water may be suitably formaldehyde resin precursor or polyimide precursor. The precursor may have predetermined viscosity adjusted by solvent in view of moulding thereafter.

Formaldehyde precursor may be of phenol resin precursor, melamine resin precursor or urea resin precursor preferably in the form of alcohol solution with non-volatile component of 40 to 70 % included. Alcohol which may be used in this invention is methanol, ethanol, propanol, butanol, cyclohexanol, phenol, cresol, ethylene glycol, trimethylene glycol or the like.

Polyimide precursor may be preferably in the form of solution for which solvent of N-methyl-2-pyrrolidone or N,N-dimethyl acetamide or the like is used and with non-volatile component of 10 to 30 % included therein.

Polymer precursor in the form of solution and hydraulic cement are blended with a blending ratio of 10 to 60 weight parts of polymer precursor to 100 weight parts of hydraulic cement. Preferable blend ratio is of 12 to 30 weight parts of polymer precursor. If hydraulic cement has filler added, then the blend ratio of polymer precursor is to 100 weight parts of powder components of hydraulic cement having the filler added.

If the blend ratio of polymer precursor is less than 8 weight parts, then it will not be able to be positively blended with hydraulic cement. This also causes the resultant product to have lower physical strength.

If the blend ratio of polymer precursor is more than 60 weight parts, the resultant product has crack found and physical strength increasing not so much. Therefore, it will be noted that more than 60 weight parts of polymer precursor is not economical.

There may be blended additive or filler with composite material of polymer precursor and hydraulic cement, if necessary. Such additive or filler may be blended by a conventional mixer such as an Eirich type mixer or a helical mixer. If the blend ratio of polymer precursor is relatively smaller, it may be preferably blended by a mixer such as provides compression function, shearing function or spatula touching function thereto. Such a mixer may be a kneader, a wet pan mill, a helical rotor, a roller mill, a Banbury type mixer or the like.

The kneaded cement composite material is moulded by roller moulding, extruder moulding, press moulding or pouring moulding, after which polymer precursor of the cement composite material is heated and cured to form a cement product having predetermined configuration and size.

Composite material including formaldehyde precursor may be heated at a temperature of 100 to 300°C and preferably at a temperature of 150 to 250°C. Composite material including polyimide precursor may be heated at a temperature of 300 to 500°C and preferably at a temperature of 350 to 450°C. Heating composite material cures polymer precursor and generates water, whereby hydraulic cement hydrates so that the cement product has higher physical strength.

In general, formaldehyde precursor is rapidly cured in an acid area of less than pH7, but it will be able to be fully cured even in an alkali area of more than pH7 if it is heated at a temperature of 150 to 250°C for a relatively longer time.

It is known that such curing reaction of formaldehyde precursor is made mainly by the following model condensation reaction;

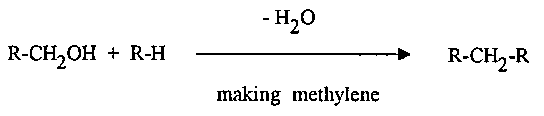

The thus generated water hydrates hydraulic cement under heat to produce a cement hydrate.

It is known that polyimide precursor is made insoluble and infusible solid of more excellent thermal resistance when it is heated at a temperature of more than 300°C through intramolecular cyclodehydration reaction.

An example of typical curing reaction of polyimide precursor produces polyimide of more excellent thermal resistance in accordance with intramolecular cyclodehydration reaction of polyamic acid having pyrromerit acid skeleton as follows; 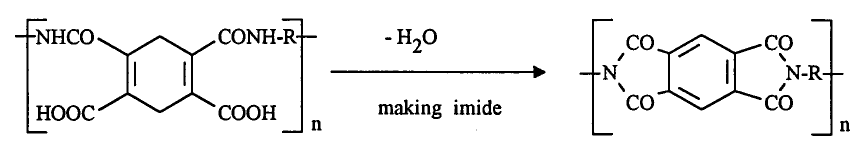 Water generated by imide reaction of polyimide precursor hydrates hydraulic cement under heat in the same manner as water generated by curing reaction of formaldehyde precursor to produce a cement hydrate.

A cement product has texture formed by rigid three-dimensional bridge structure of formaldehyde resin or polyimide and cement hydrate involved with each other, which causes the product to have higher physical strength.

Cement composite materials formed in the aforementioned manner have higher flexural strength provided thereto by heating, but it has been found that some of the cement products of the invention have higher physical strength provided thereto by immersing it in water after it is cured by heating.

Although cement composite material of the invention has no water particularly required on kneading, it may be blended with a small quantity of water in consideration of premoulding. Furthermore, there is added thereto additive such as glycerol, glycerol triacetate, polyethylene glycol, furfural, dibutyl phthalate, phthalic anhydride, stearic acid, rosin, polyamide, polyacrylamide, polyvinyl alcohol or the like.

Particularly, polyamide, polyacrylamide or polyvinyl alcohol are preferable additives for improvement of the cement product. The additive may be added directly to polymer precursor and then dissolved or dispersed therein, but it may be dissolved or dispersed in solvent such as ethanol, methanol or N,N-dimethylacetamide and then added to polymer precursor.

A blend ratio of the additive may be generally of 0.5 to 20 weight parts to 100 weight parts of polymer precursor and preferably 2 to 12 weight parts thereto.

Polyamide used in the invention may be preferably alcohol-soluble. Such alcohol-soluble polyamide may be of amide bonding -CONH- having at least a part of hydrogen substituted by methoxymethyl group or of amide bonding -CON(R)- produced from secondary amine. It will be considered that such polyamide added to polymer precursor will be able to react with polymer precursor during heating and curing it in the manner corresponding to the manner in which formaldehyde resin precusor or polyimide precursor is reacted through intramolecular cyclodehydration under heat.

Furthermore, cement composite material of the invention may be blended with filler when kneaded, if necessary. A blend ratio of filler may be determined in view of formability of composite material and physical strength of the obtained product. Filler may be of conventional sand, light-weight aggregate, wood flour, ground calcium carbonate, aluminium hydroxide which may be used as incombustible agent for plastic or rubber, inorganic pigment or the like.

In order to further improve the physical strength of the cement products of the invention, there may be used hydraulic cement having particle size distribution adjusted in multiple mode or hot press curing the cement products under pressure to adjust blow-holes thereof.

In order to improve adhesion of filler and/or hydraulic cement to resin, there may be added conventional silane coupling agent thereto. Such silane coupling agent may be of γ-aminopropyl triethoxysilane, γ-ureidopropyl triethoxysilane or γ-grycidoxypropyl trimethoxysilane.

Some examples of the invention and some comparisons will be described hereinafter.

### Examples 1 to 3

There were kneaded 100 weight parts of hydraulic cement which was formed of normal Portland cement, alumina cement (trade name DENKA Alumina Cement No. 1 manufactured by Denki Kagaku Kogyo Kabushiki Kaisha, Japan) or blend thereof, 23 weight parts of alcohol-soluble phenol resin precursor (trade name Shonol manufactured by Showa Highpolymer Co., Ltd., Japan) and 2.3 weight parts of glycerol in a mortar mixer for 6 minutes. The thus kneaded mixture passes through a pair of rollers used as a noodle maker and having a revolution ratio identical to each other about 20 times and to form a sheet-like strip of 1.5 mm thickness, which was divided into sheet-like articles of about 25 mm width and 75 mm length. 10 sheet-like products were heated and cured at a temperature of 150°C for 18 hours to make cement products.

5 cement products thereof were provided directly for bending tests while remaining 5 cement products were provided for bending tests after they were immersed in water of 20°C for three days. The bending tests were made in accordance with JIS (Japanese Industrial Standard) R 5021 with a distance of 50 mm between supporting points where the cement products were supported. Table I shows the results of the bending tests. The flexural strengths of the cement products were measured immediately after they were heated at a temperature of 150°C (referred to as direct test in Table I) and after they were immersed in water thereafter.

**Table I**

| | Ex 1 | Ex 2 | Ex 3 |
|---|---|---|---|
| | COMPOSITION | | |
| normal Portland cement | 100 | 60 | 0 |
| alumina cement | 0 | 40 | 100 |
| phenol resin precursor | 23 | 23 | 23 |
| glycerol | 2.3 | 2.3 | 2.3 |

| flexural strength (Kgf/cm²) | | | |
|---|---|---|---|
| direct test | 466 | 545 | 572 |
| after immersion in water | 460 | 581 | 599 |

### EXAMPLE 4

There were kneaded 100 weight parts of alumina cement (tradename DENKA Alumina Cement No. 1 manufactured by Denki Kagaku Kogyo Kabushiki Kaisha, Japan) or blend thereof, 15 weight parts of alcohol-soluble phenol resin precursor (trade name Shonol manufactured by Showa Highpolymer Co., Ltd., Japan) and 1.5 weight parts of glycerol in a bench type kneader for 6 minutes. The thus kneaded mixture was moulded in a pushing mould under pressure of 150 kgf/cm² to form cement products of 10 mm thickness, 40 mm width and 160 mm length. The cement products were heated and cured at a temperature of 150°C for 18 hours to make cement products.

5 cement products thereof were provided directly for bending tests. The bending tests were made in accordance with JIS R 5021 with a distance of 100 mm between supporting points where the cement products were supported. The resultant flexural strengths of them were 529 kgf/cm².

### Example 5

The same materials as in Example 4 were used. 100 weight parts of alumina cement, 20 weight parts of alcohol-soluble phenol resin precursor and 1.8 weight parts of glycerol were kneaded in a bench type kneader for 6 minutes. The thus kneaded mixture was moulded in a vacuum extruding moulding machine to form cement products of 15 mm thickness, 20 mm width and 160 mm length. The cement products were cured and provided for bending tests in the same manner as in EXAMPLE 4. The resultant flexural strengths of them were 551 kgf/cm².

### Examples 6 to 10

Cement products were manufactured in the same manner as in Examples 1 to 3 except for fillers of N-methoxymethyl-polyamide having hydrogen of amido bonding substituted by methoxymethyl group by about 30 % (trade name Toresin manufactured by Teikoku Chemical Industries Co., Ltd., Japan) and ethanol additionally used and blend ratios thereof set as indicated in Table II. The cement products were provided for bending tests in the same manner as in Examples 1 to 3. The results of the tests are in Table II.

**Table II**

| | Ex 6 | Ex 7 | Ex 8 | Ex 9 | Ex 10 |
|---|---|---|---|---|---|
| | COMPOSITION | | | | |
| normal Portland cement | 100 | 40 | 40 | 0 | 0 |
| alumina cement | 0 | 60 | 60 | 100 | 100 |
| phenol resin precursor | 21.6 | 23 | 20 | 21.6 | 13.6 |
| polyamide | 1.4 | 0.8 | 0.8 | 1.4 | 1.4 |
| ethanol | 0 | 0 | 3.2 | 0 | 8.0 |
| glycerol | 2.3 | 2.3 | 2.0 | 2.3 | 2.3 |

| flexural strength (Kgf/cm²) | | | | | |
|---|---|---|---|---|---|
| direct test | 584 | 713 | 628 | 762 | 357 |
| after immersion in water | 561 | 720 | 640 | 785 | 378 |

### Examples 11 to 13

Cement products were manufactured in the same manner as in Examples 1 to 3 except for fillers of polyacryl amide (trade name Acoflock N100S manufactured by Mitsui Sianamiddo Co., Ltd., Japan) or polyvinylalcohol (trade name Gosenol manufactured by Nippon Gosei Kagaku Kogyo Kabushiki Kaisha, Japan) in addition to N-methoxymethyl-polyamide (trade name Toresin manufactured by Teikoku Kagaku Kogyo Kabushiki Kaisha, Japan) of Examples 6 to 10 additionally used and blend ratios thereof set as indicated in Table III. The cement products were provided for bending tests in accordance with JIS R 5021 with a distance of 50 mm between supporting points where the cement products were supported. The results of the tests are in Table III.

**Table III**

| | Ex 11 | Ex 12 | Ex 13 |
|---|---|---|---|
| | COMPOSITION | | |
| alumina cement | 100 | 100 | 100 |
| phenol resin precursor | 21.6 | 21.6 | 21.6 |
| polyamide | 1.4 | - | - |
| polyacrylamide | - | 1.4 | - |
| polyvinylalcohol | - | - | 1.4 |
| glycerol | 2.3 | 2.3 | 2.3 |

| flexural strength (Kgf/cm²) | | | |
|---|---|---|---|
| direct test | 1160 | 1320 | 650 |

### EXAMPLE 14

There were kneaded 100 weight parts of alumina cement (tradename DENKA Alumina Cement No. 1 manufactured by Denki Kagaku Kogyo Kabushiki Kaisha, Japan) and 20 weight parts of polyimide precursor (trade name U-varnish-A manufactured by Ube Kosan Co., Ltd., Japan) and moulded in the same manner as in Examples 1 to 3. The thus kneaded mixture was heated and cured at a temperature of 120°C for one hour, at 150°C for 20 minutes, at 200°C for 20 minutes, at 250°C for 20 minutes and finally at 350°C for one hour to form cement products.

The cement products were provided directly for bending tests. The bending tests were made in accordance with JIS R 5021 with a distance of 50 mm between supporting points where the cement products were supported. The resultant flexural strengths of them were 402 kgf/cm².

### Examples 15 to 18

The cement products obtained in the same manner as in Examples 6 and 9 were heated at a temperature of 200°C for 18 hours or at 300°C for 6 hours.

The cement products were provided for bending tests in the same manner as in Examples 1 to 3. In the tests, the flexural strengths of the cement products were measured before heated, after heated and after immersed in water in order to compare them. The results of the tests are indicated in Table IV.

**Table IV**

| | Ex 15 | Ex 16 | Ex 17 | Ex 18 |
|---|---|---|---|---|
| kind of cement | normal Portland cement | | alumina cement | |
| heating temp. ( °C ) | 200 | 300 | 200 | 300 |

| flexural strength (kgf/cm²) | | | | |
|---|---|---|---|---|
| before heated | 584 | 584 | 762 | 762 |
| after heated | 713 | 792 | 1040 | 1120 |
| after immersed in water | 706 | 785 | 1060 | 1220 |

### COMPOMPARISONS 1 and 2

The cement products of about 4 mm thickness having high flexural strength commercially available from a certain Japanese Company were divided into 9 pieces, three of which were provided for bending tests.

In order to determine thermal resistance of the cement products, each three remaining pieces were heated at a temperature of 200°C for 18 hours and at a temperature of 300°C for 6 hours, respectively and then provided for bending tests.

The bending tests were made in accordance with JIS R 5021 with a distance of 50 mm between supporting points where the cement products were supported. The results of the bending tests are indicated in Table V.

**Table V**

| | **COMPARISON 1** | **COMPARISON 2** |
|---|---|---|
| Heating Temp. (°C) | 200 | 300 |
| Flexural Strength (kgf/cm²) | | |
| Before Heated | 1390 | 1390 |
| After Heated | 462 | 330 |

It will be noted that the cement products of Examples 1 to 18 of the invention had higher flexural strength and more excellent thermal resistance and water resistance in comparison with the cement products of Comparisons 1 and 2.

### Moulding Material

This invention further provides moulding material including mixture of composite material comprising at least one kind of hydraulic cement, polymer precursor substantially including no water, but generating water by curing reaction and additives and/or fillers, if necessary. The moulding material has no water substantially added thereto.

The moulding material of the invention has flexural strength of more than 50 N/mm² and in some examples has flexural strength of more than 100 N/mm² even though it has no reinforcing fibres filled therein.

The moulding material may be produced by mixing the composite material in the thermally molten form and thereafter grinding and classifying the same.

Otherwise, the moulding material may be produced by mixing the composite material in the form of alcohol solution of the polymer precursor and thereafter grinding and classifying it without or with alcohol evaporated.

Polymer precursor used may be preferably formaldehyde resin precursor, but it may be polyimide precursor. Formaldehyde precursor may be of phenol resin precursor, melamine resin precursor or urea resin precursor, which substantially includes no water, but generates water by heating and curing. This means that the precursor potentially includes water. In this invention, "Substantially including no water" means that water content of the polymer precursor is less than 5%, preferably less than 4% and most preferably less than 2% relative to the weight of hydraulic cement. The water content may be measured by Karl-Fischer Method (Analytical Chemistry Manual issued by Association of Japan Analytical Chemistry in 1971, pages 31 and 32). If the water content of the polymer precursor exceeds 5%, then hydraulic cement will be cured or weathered on manufacturing or storing the moulding material, which causes the physical strength of the mould goods to be lowered.

Hydraulic cement to be used in the moulding material of the invention may be of conventional cement such as Portland cement, blended cement, special cement and various gypsum which may be identical to those used in the cement composite material of the invention aforementioned. One or more than two kinds of hydraulic cement can be used. The hydraulic cement may be used as the commercially available one is, but it has particle distribution adjusted in multi mode or particle configuration rounded in order to improve the physical strength or fluidity of the moulding material.

Formaldehyde precursor used in the moulding material of the invention may be blended with hydraulic cement in accordance with mouldability and property of the mould goods. In general, a blend ratio of formaldehyde precursor may be 5 to 100 weight parts and preferably 7 to 60 weight parts to 100 weight parts of hydraulic cement. If the blend ratio of formaldehyde precursor is less than 5 weight parts, then the blended condition of the components and the fluidity of the moulding material is lowered and the mould goods have defect produced therein. If it is more than 100 weight parts, then the mould goods disadvantageously have cracks found therein and physical strength heightened no longer or otherwise lowered. The blend ratio of formaldehyde resin precursor is set while it has no alcohol included therein.

There may be preferably blended the moulding material of the invention with additive of polymer having acid amide bonding such as polyamide or polyacryl, for example, in order to improve property of the mould goods.

In general, a blend ratio of the additive may be 0.5 to 30 weight parts and preferably 2 to 20 weight parts relative to 100 weight parts of formaldehyde precursor. If it is less than 0.5 weight parts, then there appears no improvement on property of the mould goods. Also, if it is more than 30 weight parts, there ineconomically increases no improvement on property of the mould goods.

The additive may be preferably finely ground before blended. When it is to be blended using alcohol, polyamide may be preferably alcohol-soluble. Such alcohol-soluble polyamide may be amide bonding -CONH- having at least a part of hydrogen substituted by methoxymethyl group or of amide bonding -CON(R)- produced from secondary amine.

The moulding material of the invention may be blended with other additive such as conventional lubricant, silane coupling agent or colouring agent in addition to the aforementioned polyamide. Lubricant may be formed of glycerol, glycerol triacetate, phthalic anhydride, furfural, alkyl phenol, zinc stearate, magnesium stearate, rosin or the like. Silane coupling agent may be of γ-aminopropyl triethoxysilane, γ-ureidopropyl triethoxysilane or γ-grycidoxypropyl triethoxysilane. Colouring agent may be formed of organic or inorganic pigment such as aniline black, carbon black or titanium oxide.

Furthermore, moulding material of the invention may be blended with filler. Such filler may be of conventional one such as wood flour, pulp, cotton flock, stone dust, ground calcium carbonate, aluminium hydroxide, sand, light-weight aggregate, glass fibres, carbon fibres or the like. Polymer precursor may have the blend ratio thereof increasing as the amount of the filler increases.

A method for manufacturing moulding material of the invention will he described hereinafter.

Formaldehyde precursor, hydraulic cement and additive are blended so as to uniformly disperse their components to form the moulding material of the invention. They may be blended by a conventional mixing machine such as a mortar mixer, a kneader, a blender or a roller machine. The proper mixing machine may be preferably selected in accordance with the blend ratio of the components and a mixing system described herein just below.

A first mixing system is one in which the components in the form of powder may be mixed at the normal temperature by a conventional cold mixing machine such as a kneader, a mortar mixer or a blender. The components may be preferably finely ground or may be preferably dispersed in a small quantity of solvent such as methanol or ethanol which is added thereto in order to effectively prevent them from being scattered. The mixture in the form of powder may be dried, if necessary, to obtain the moulding material.

A second mixing system is one in which the components in the thermally molten form may be thermally mixed by a conventional thermal mixing machine such as a Banbury type mixer, a kneader or a hot roller machine, which is heated by steam or an electric heater. A temperature at which the components are heated is so set that formaldehyde precursor is fully molten, but a reaction in which it is made methylene does not progress so much. In general, the preferable temperature is 80 to 150°C. If it exceeds 150°C, formaldehyde precursor is cured too much before the components are fully mixed.

The mixture which is obtained by thermally mixing the components is dried, ground and classified to form the moulding material. Otherwise, the mixture which is obtained by thermally mixing the components is used as the moulding material without grinding and classifying it in view of a moulding method and/or a product configuration in manufacturing the mould goods.

A third mixing system is one in which the components in the form of alcohol solution of formaldehyde precursor may be mixed by a conventional mixing machine such as a kneader, a Banbury type mixer, a mortar mixer or a two-roller machine.

In general, this mixing is made at the normal temperature, but it may be made while alcohol is heated nearly at its boiling temperature in order to enhance an evaporation of alcohol if the components are fully dispersed in alcohol.

Formaldehyde precursor used for the moulding material is alcohol-soluble and it is used in the form of alcohol solution. A quantity of alcohol used therefor may be determined in view of the dispersion effect of the components and mouldability of the moulding material. Preferably, it may be alcohol solution having 20 to 80% of non-volatile component included therein.

Alcohol which is used in the moulding material of this invention may be methanol, ethanol, propanol, butanol, cyclohexanol, phenol, cresol, ethylene glycol, trimethylene glycol or the like.

The mixture which is obtained by mixing the components is dried to evaporate alcohol, if necessary, and thereafter ground and classified to form the moulding material. Otherwise, the mixture which is obtained by mixing the components is used as the moulding material without grinding and classifying it in view of a moulding method and/or a product configuration in manufacturing the mould goods.

The thus obtained moulding material may be moulded by compression moulding, transfer moulding, injection moulding, extrusion moulding, flowing-in moulding (pouring moulding) or the like and heated while or after moulded to form the mould goods. A heating temperature may be 100 to 300°C and preferably 150 to 250°C. This heating is considered to cure formaldehyde resin precursor and generates water, which causes hydraulic cement to hydrate to provide higher physical strength thereto. It is considered that this higher physical strength will be brought by aluminium ion ion-bridging with resin which is caused by a small quantity of water generated therein.

Although, in the aforementioned, formaldehyde resin precursor is used as polymer precursor, it should be understood that polyimide precursor may be used as polymer precursor.

The mould goods manufactured by the invention may be applied for various uses. They may be used for transportation fields such as bodies, ship parts, pallets or the likes, electronic or electric fields such as instrument housings, insulation parts, IC sealers, parabola antennas, printed circuit board, a floor for office automation device or the likes, public engineering or construction fields such as concrete reinforcing materials, concrete moulds, composite moulds such as superstrong composite moulds, paving materials, tiles, water tanks, roofing materials (roofing tile, roofing slate and others), inner or outer wall materials, ceiling materials, partition wall materials, column for road, capsule houses, light-weight manhole, artificial marble products such as kitchen counters or washing stands or the likes, chemical industry fields such as tanks, pipes, pipe covering or the likes and general machine fields such as gears or the likes.

Some examples of the moulding materials of the invention and one comparison will be described hereinafter.

### Examples 19 and 20

There were blended and mixed alumina cement (trade name DENKA Alumina Cement No. 1 manufactured by Denki Kagaku Kogyo Kabushiki Kaisha, Japan), phenol resin precursor (trade name Shonol BRG-558 manufactured by Showa Highpolymer Co., Ltd., Japan), hexamethylene tetramine, zinc stearate, furfural and colouring agent (trade name BAYERTITAN manufactured by Bayer Japan Co., Ltd., Japan) by a roller mill for rubber which was heated at a temperature of 110°C by steam. A revolution ratio of rollers was set at 1 to 1.3. The water content of phenol resin precursor measured by Karl-Fischer method was 0.1%.

Dough mixture which was wound on the rollers of the roller mill was removed out of the rollers and thereafter ground in a stainless steel mortar to form the moulding material. The moulding material was filled in a die having 120°C maintained and compressively moulded under 10 N/mm². Thereafter, the die temperature was raised to 180°C and maintained at this temperature for 6 hours to form sheet-like mould goods of about 3 mm thickness.

The sheet-like mould good was divided into 10 pieces of 15 mm width and 80 mm length. 5 pieces thereof were provided directly for bending tests while remaining 5 pieces were provided for bending tests after they were immersed in water of 20°C for seven days. The bending tests were made by a three point loading method with a distance of 60 mm between supporting points where the pieces were supported. Flexural elastic modulus was determined by measuring deflection at the middle of the tested pieces.

The composition of Examples 19 and 20 are indicated at Table VI-I and the results of the tests are shown in Table VI-II.

**Table VI-I**

| | Ex 19 | Ex 20 | Ex 21 |
|---|---|---|---|
| | Composition | | |
| alumina cement | 100 | 100 | 100 |
| phenol resin precursor | 25.0 (BRG-558) | 16.6 (BRG-558) | 22.0 (BKM-2620) |
| hexamethylenetetramine | 2.50 | 1.66 | - |
| zinc stearate | 0.50 | 0.33 | 0.22 |
| furfural | - | 1.60 | - |
| coloring agent | 3.00 | - | - |

**Table VI-II**

| | Ex 19 | Ex 20 | Ex 21 |
|---|---|---|---|
| flexural strength (N/mm²) | | | |
| before immersion in water | 130 | 102 | 58.0 |
| after immersion in water | 153 | 105 | not measured |

| flexural elastic modulus (kN/mm²) | | | |
|---|---|---|---|
| before immersion in water | 33.8 | 35.3 | not measured |
| after immersion in water | 33.1 | 35.1 | not measured |

| water absorption rate after immersion in water % | | | |
|---|---|---|---|
| | 0.19 | 0.21 | not measured |

### Example 21

There were ground in a stainless steel mortar alumina cement (trade name DENKA Alumina Cement No. 1 manufactured by Denki Kagaku Kogyo Kabushiki Kaisha, Japan) and phenol resin precursor (trade name Shonol BKM-2620 manufactured by Showa Highpolymer Co., Ltd., Japan) and added thereto zinc stearate in the form of powder in a mortar mixer for four minutes to form moulding materials. The water content of phenol resin precursor measured by Karl-Fischer method was 4.5%. The moulding materials were moulded to form testing pieces in the same manner as in Examples 19 and 20.

The composition of Example 21 is indicated in Table VI-I and the result of the test is shown in Table VI-II.

### Examples 22 to 25

There were blended and premixed normal Portland cement, alumina cement (trade name DENKA Alumina Cement No. 1 manufactured by Denki Kagaku Kogyo Kabushiki Kaisha, Japan), phenol resin precursor (trade name Shonol BRS-330 manufactured by Showa Highpolymer Co., Ltd., Japan, with 60.6% of non-volatile component included therein and water content of 1.3%), polyamide including amide bonding -CONH- having at least a part of hydrogen substituted by methoxymethyl group (trade name Toresin manufactured by Teikoku Chemical Industries Co., Ltd., Japan), glycerol and silane coupling agent (trade name KBE-903 manufactured by Shin-Etsu Chemical Co., Ltd., Japan) in a mortar mixer for two minutes. Thereafter, they were mixed for four minutes in a roller mill for rubber having a revolution ratio of a pair of rollers of 1 to 1.2.

Dough mixture which was wound on the rollers of the roller mill was removed out of the rollers to form sheet-like moulding materials of about 2 mm thickness. The sheet-like moulding materials were compressively moulded in a die of 80°C under compression stress of 6 N/mm² and heated at a temperature of 200°C for 15 hours to form sheet-like mould goods.

The sheet-like mould good was divided into 10 pieces of 25 mm width and 100 mm length, which were provided for tests identical to those in Examples 19 and 20.

The composition of Examples 19 and 20 are indicated in Table VII-I and the results of the tests are shown in Table VII-II. The tested pieces were subject to X-ray diffraction in which there were found no peak in cement hydrate.

**Table VII-I**

| | Ex 22 | Ex 23 | Ex 24 | Ex 25 |
|---|---|---|---|---|
| Composition | | | | |
| normal Portland cement | 100 | 60 | - | - |
| alumina cement | - | 40 | 100 | 100 |
| phenol resin precursor | 18.4 | 19.3 | 21.2 | 21.2 |
| polyamide | 1.6 | 1.7 | 1.8 | 1.8 |
| glycerol | 2.0 | 2.2 | 2.3 | 2.3 |
| coupling agent | - | - | - | 2.3 |

**Table VII-II**

| | Ex 22 | Ex 23 | Ex 24 | Ex 25 |
|---|---|---|---|---|
| flexural strength (N/mm²) | | | | |
| before immersion in water | 104 | 165 | 191 | 204 |
| after immersion in water | 70.5 | 156 | 212 | 208 |

| flexural elastic modulus (kN/mm²) | | | | |
|---|---|---|---|---|
| before immersion in water | 45.4 | 47.8 | 38.5 | 39.3 |
| after immersion in water | 40.7 | 44.9 | 34.5 | 35.1 |

| water absorption rate after immersion in water % | | | | |
|---|---|---|---|---|
| | 1.57 | 0.34 | 0.16 | 0.15 |

### Examples 26 to 29

There were blended and mixed in addition to components in Example 23 melamine resin precursor (manufactured by Mitsui Toatsu Chemicals, Inc., Japan having 74.6% of non-volatile component included therein and water content of 4.3%) in the form of alcohol solution as formaldehyde resin precursor and polyacrylamide as additive in such composition as shown in Table VIII-I. After the components were premixed in a bench type kneader for two minutes, they were mixed for four minutes in a roller mill for rubber having a revolution ratio of a pair of rollers of 1 to 1.2 set.

Dough mixture which was wound on the rollers of the roller mill was removed out of the rollers to form sheet-like moulding materials of about 3 mm thickness. The sheet-like moulding materials were rolled several times through a roll mill having a revolution ratio of 1 to 1 until it has a thickness of about 1.5 mm and heated at a temperature of 200°C for 15 hours to form sheet-like mould goods. The sheet-like mould good was divided into 10 pieces of 25 mm width and 100 mm length, which were provided for tests identical to those in Examples 19 and 20.

The composition of Examples 26 to 29 are indicated in Table VIII-I and the results of the tests are shown in Table VIII-II.

**Table VIII-I**

| | Ex 26 | Ex 27 | Ex 28 | Ex 29 |
|---|---|---|---|---|
| Composition | | | | |
| normal Portland cement | 100 | - | - | - |
| alumina cement | - | 100 | 100 | 100 |
| phenol resin precursor | 30.0 | 21.2 | 21.2 | - |
| melamine resin precursor | - | - | - | 18.0 |
| polyamide | - | 1.6 | - | 4.0 |
| polyacrylamide | - | - | 1.6 | - |
| glycerol | 3.0 | 2.3 | 2.3 | 4.0 |

**Table VIII-II**

| | Ex 26 | Ex 27 | Ex 28 | Ex 29 |
|---|---|---|---|---|
| flexural rigidity (N/mm²) | | | | |
| before immersion in water | 71.1 | 112 | 125 | 33.5 |
| after immersion in water | 64.0 | 126 | 103 | not measured |

| flexural elastic modulus (kN/mm²) | | | | |
|---|---|---|---|---|
| before immersion in water | 28.4 | 32.8 | 32.7 | not measured |
| after immersion in water | 27.1 | 30.5 | 28.4 | not measured |

| water absorption rate after immersion in water % | | | | |
|---|---|---|---|---|
| | 2.16 | 0.42 | 0.63 | not measured |

### Example 30 and Comparison 3

The mould goods of Example 27 were heated at a temperature of 300°C for six hours for appreciating thermal resistance thereof and provided for bending tests. In comparison, the mould goods of about 4 mm thickness having high flexural strength commercially available from a certain Japanese Company were divided into pieces of 25 mm width and 75 mm length, which were heated at the same temperature for the same hours and provided for bending tests.

Table IX shows flexural strength of the tests.

**Table IX**

| | **EX 30** | **COMPARISON 3** |
|---|---|---|
| Flexural Strength (N/mm²) | | |
| Before Heated | 112 | 136 |
| After Heated | 106 | 32.4 |

It will be noted that the mould goods of Examples 19 to 30 had higher flexural strength, elastic modulus and more excellent thermal resistance and water resistance in comparison with the mould goods of Comparison 3.

### Concrete Member

Also, this invention further provides a concrete member having a concrete body and reinforcing body provided on a surface of the concrete body or in the concrete body. The reinforcing body comprising at least one kind of hydraulic cement, polymer precursor such as formaldehyde precursor or polyimide precursor substantially including no water, but generating water by curing reaction and additive and/or filler, if necessary.

The reinforcing body may be provided on or in the concrete body by various methods such as burying method or permanent mould method, which will be described in detail later.

Hydraulic cement used in the reinforcing body of the invention may be conventional cement such as Portland cement, blended cement, special cement and vanous gypsum which may be identical to those used in the cement composite material or moulding materials of the invention described with reference to Examples 1 to 30. One or more than two kinds of hydraulic cement can be used.

Polymer precursor is preferably formaldehyde resin precursor, but it may be polyimide precursor.

Formaldehyde resin precursor used for the reinforcing body of the invention may be phenol resin precursor, melamine resin precursor or urea resin precursor, which substantially includes no water, but generates water by heating and curing.

Formaldehyde resin precursor used for the reinforcing body of the invention is alcohol-soluble and it is used in the form of alcohol solution. Alcohol which is used in the reinforcing body of this invention may be methanol, ethanol, propanol, butanol, cyclohexanol, phenol, cresol, ethylene glycol, trimethylene glycol or the like.

Formaldehyde resin precursor for the reinforcing body of the invention is blended with hydraulic cement in accordance with mouldability and property of the reinforcing body. In general, a blend ratio of formaldehyde resin precursor may be 5 to 100 weight parts (excluding alcohol) to 100 weight parts of hydraulic cement. If the blend ratio of formaldehyde resin precursor is less than 5 weight parts, then the blended condition of the components will be made worse and the reinforcing body has defect produced therein. If it is more than 100 weight parts, the reinforcing body disadvantageously has cracks produced therein and physical strength heightened no longer or otherwise lowered.

There may be preferably blended the reinforcing body of the invention with additive of polymer having acid amide bonding such as polyamide or polyacryl, for example, in order to improve property of the reinforcing body.

In general, a blend ratio of the additive may be 0.5 to 30 weight parts and preferably 2 to 20 weight parts relative to 100 weight parts of formaldehyde resin precursor. If it is less than 0.5 weight parts, then there will appear no improvement on property of the reinforcing body while if it is more than 30 weight parts, there will ineconomically increase no improvement on property of the reinforcing body in the same manner as the cement including composite material and the mould goods of the invention described with respect to Examples 1 to 30.

The reinforcing body of the invention may be blended with other additive such as conventional lubricant, silane coupling agent or colouring agent in addition to the aforementioned polyamide. Lubricant may be glycerol, glycerol triacetate, phthalic anhydride, furfural, alkyl phenol, zinc stearate, magnesium stearate, rosin or the like. Silane coupling agent may be of *γ*-aminopropyl triethoxysilane, γ-ureidopropyl - triethoxysilane or γ-grycidoxypropyl triethoxysilane. Colouring agent may be formed of organic or inorganic pigment such as aniline black, carbon black or titanium oxide. It will be noted that these additives are identical to those used in the cement including composite materials and the moulding materials of the invention with respect to Examples 1 to 30.

Furthermore, the reinforcing body of the invention may be blended with conventional filler such as wood flour, pulp, cotton flock, stone dust, ground calcium carbonate, aluminium hydroxide, sand, light-weight aggregate, glass fibres, carbon fibres or the like, which are also identical to those used in the cement including composite materials and the moulding materials with respect to Examples 1 to 30.

Formaldehyde resin precursor, hydraulic cement and additive and/or filler added, if necessary, are mixed in the form of powder, paste or sheet in a mortar mixer, a blender, a kneader or a hot roller machine.

Thereafter, they are moulded to a predetermined shape and heated and cured. The mixture after they are mixed is dried, ground and classified to form material for reinforcing body, which may be moulded by compression moulding, extrusion moulding or injection moulding. A heating temperature may be 100 to 300°C and preferably 150 to 250°C.

A method for manufacturing a concrete member of the invention will be described with reference to the accompanying drawings hereinafter.

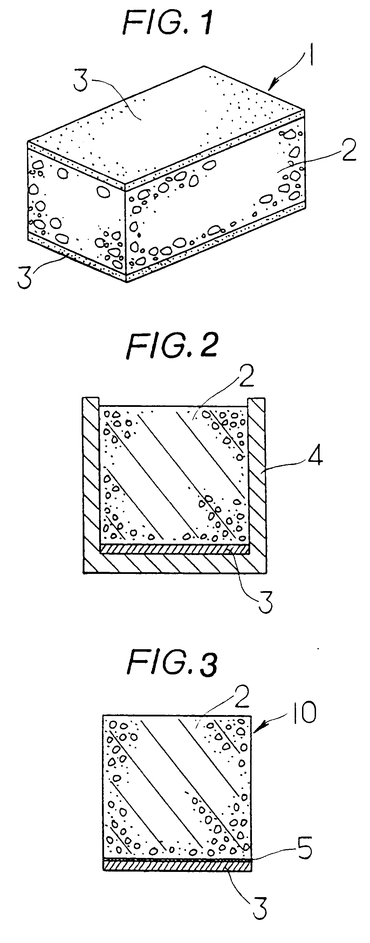

As shown in Fig. 1, a concrete member 1 constructed in accordance with one embodiment of the invention comprises a concrete body 2 and two reinforcing body 3 integrally mounted on both surfaces of the concrete body 2. It should be noted that only one reinforcing product 3 may be mounted on one of the surfaces of the concrete body 2. The reinforcing body or bodies are of such a construction as aforementioned.

As shown in Fig. 2, the reinforcing body 3 may be placed on a inner bottom of a mould 4 and freshly mixed concrete may be placed into the mould 4 and cured to form the concrete body 2 integrally provided with the reinforcing body 3.

As shown in Fig. 3, the reinforcing body 3 may be adhered by adhesive agent 5 to the surface of the concrete body 2 which is previously formed by a mould into which freshly mixed concrete is placed.

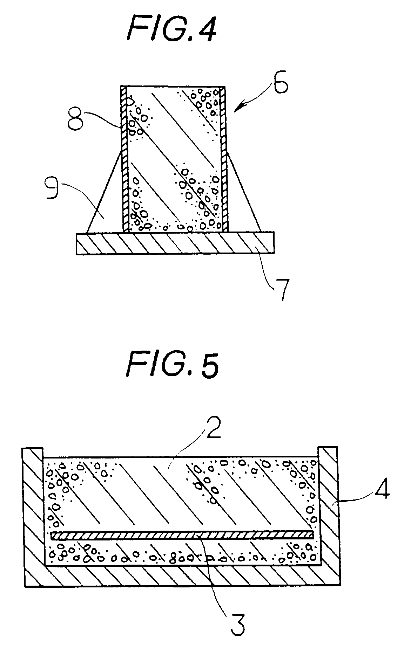

As shown in Fig. 4, the concrete body 2 may be moulded in a permanent mould 6 into which freshly mixed concrete is placed. The permanent mould 6 is formed of a plate-like mould portion 7 of wood or meal and a box-like mould portion 8 of reinforcing body which may be produced in the same manner as the reinforcing body 3.

After the concrete body 2 is formed, only the plate-like mould portion 7 is removed out of the concrete body 2. The box-like mould portion 8 of reinforcing body is integrally mounted on the cured concrete body 2. In order to support the box-like mould portion 8 on the plate-like mould portion 7, there may be provided supporting members 9 which serve to prevent the box-like mould portion 8 from falling due to pressure from freshly mixed concrete being placed into the permanent mould 6.

Otherwise, as shown in Fig. 5, the reinforcing product 3 is placed in the mould 4 so that the reinforcing product 3 is spaced from the inner bottom of the mould 4 by a spacer not shown. Thus, it will be noted that the concrete body 2 has the reinforcing body 3 integrally provided therein.

The reinforcing body used for the concrete member of the invention may have no surface treatment made and integrally provided on or in the concrete body, but it may preferably have roughness provided on the surface thereof on which the concrete body is provided.

Alternately, it may have adhesive agent of epoxy resin, unsaturated polyester resin or the like provided on the surface thereof on which the concrete body is mounted or a coat layer formed on the surface thereof by coating styrene-butadiene copolymer, acrylonitrile-butadienecopolymer, ethylene-vinylacetate copolymer and the like in the form of latex or emulsion before freshly mixed concrete is placed.

Freshly mixed concrete to be placed may be normal concrete, light-weight concrete, high strength concrete, resin concrete or mortar thereof, but it is never limited to particular concrete.

Furthermore, the concrete member of the invention may have conventional reinforcing bars provided therein together with the reinforcing body of the invention.

Some examples of the concrete member of the invention will be described hereinafter.

### Example 31

There were blended and premixed 100 weight parts of alumina cement (trade name DENKA Alumina Cement No. 1 manufactured by Denki Kagaku Kogyo Kabushiki Kaisha, Japan), 21.6 weight parts of phenol resin precursor (trade name Shonol BRS-330 having non-volatile component of 60.6% manufactured by Showa Highpolymer Co., Ltd., Japan), 1.4 weight parts of N-methoxymethyl polyamide having hydrogen of amide bonding substituted by methoxymethyl group by 30% (trade name Toresin manufactured by Teikoku Chemical Industries Ltd., Japan) and 2.3 weight parts of glycerol in a mortar mixer for two minutes.

Thereafter, they were mixed in a roller mill for rubber having a revolution ratio of 1 to 1.3 set for four minutes. Dough mixture which was wound on the rollers of the roller mill was removed out of the rollers.

Thereafter, it passed several times through a roller machine having a revolution ratio of 1 to 1 set and was reduced to form a sheet-like product of 2 mm thickness, which was heated at a temperature of 200°C for 18 hours to form a reinforcing product.

As shown in Fig. 2, the reinforcing body of 2 mm thickness, 40 mm width and 160 mm length was placed in the inner bottom of the steel mould of 40 mm thickness, 40 mm width and 160 mm length and thereafter freshly mixed normal concrete shown in Table X was placed into the steel mould.

When 24 hours lapsed after the concrete was placed, the concrete member was protected in a steam atmosphere of 65°C for four hours to produce the complete concrete member.

The concrete member having an age of 7 days was provided for bending test in accordance with JIS 5201.

As the result of the bending test, the flexural strength of the concrete member was 17.7 N/mm² and it was found that it was about 1.9 times of 9.5 N/mm² of conventional concrete member formed of only normal concrete produced on the same conditions.

**Table X**

| (Weight Parts ) | Normal concrete | Normal Mortar | Light-weight Mortar |
|---|---|---|---|
| normal Portland cement | 100 | 100 | 100 |
| water | 30 | 30 | 44 |
| naphthol high quality water reducction agent | 2.5 | 2.2 | 1.0 |
| fine aggregate A* | 155 | 180 | - |
| fine aggregate B** | 130 | - | - |
| light-weight aggregate (pearlite) | - | - | 32 |

| | | | |
|---|---|---|---|
| * Ground sand of less than 5 mm particle diameter | | | |
| ** Ground stone of 5 to 10 mm particle diameter | | | |

### Example 32

Normal concrete having a size of 40 mm x 40 mm x 160 mm and composition of Table X was moulded and protected and cured in a steam atmosphere of 65°C for four hours. The normal concrete after an age of 7 days has the reinforcing body of Example 31 adhered by epoxy resin adhesive to a bottom thereof as shown in Fig. 3 to produce a concrete member. After curing the adhesive, the concrete member was provided for bending test in accordance with JIS 5201.

As the result of the bending test, the flexural strength of the concrete member was 16.4 N/mm² and it was found that it was about 1.7 times of 9.5 N/mm² of conventional concrete member formed of only normal concrete produced on the same conditions.

### Example 33

As shown in Fig. 4, a box-like mould portion formed of reinforcing body of Example 31 having 2 mm thickness, 40 mm width and 160 mm length was supported by the supporting member on the steel plate and partitioned at its end by plywood to form a permanent mould. In this permanent mould was placed normal mortar of Table X, which was protected in a steam atmosphere of 65°C for 24 hours to produce a concrete member of 15 mm thickness, 40 mm width and 160 mm length having the reinforcing body integrally provided therewith. The concrete member after an age of 7 days was provided for bending test in accordance with JIS 5201.

As the result of the bending test, the flexural strength of the concrete member was 45.4 N/mm² and it was found that it was about 3.3 times of 13.6 N/mm² of conventional member formed of only normal mortar produced on the same conditions.

### Example 34

The concrete member was produced and tested in the same manner as in Example 32, except for light-weight mortar used as material to be placed in place of normal concrete.

As the result of the bending test, the flexural strength of the concrete member was 17.8 N/mm² and it was found that it was about 4.9 times of 3.6 N/mm² of conventional member formed of only light-weight mortar produced on the same conditions. The concrete member of Example 34 had specific gravity of 1.69, which means that it was light.

### Example 35

A concrete member was produced in the same manner as in Example 31 except for the reinforcing body placed in a steel mould as shown in Fig. 5. The reinforcing body was formed by forming therein a circular opening of 10 mm diameter (pitch of 20 mm) before being heated and thereafter being heated. The reinforcing body was supported by the spacer not shown in the steel mould of 15 mm thickness, 200 mm width and 200 mm length.

In the steel mould was placed normal mortar of Table X, which was protected in a steam atmosphere of 65°C for four hours when 24 hours lapsed after the mortar was placed to produce the complete concrete member. The concrete member after its age of 7 days was cut into pieces of 40 mm width and 200 mm length and provided for bending tests in accordance with JIS 5201.

As the result of the bending test, the flexural strength of the concrete member was 19.7 N/mm² and it was found that it was about 1.5 times of 13.6 N/mm² of conventional concrete member formed of only mortar produced on the same conditions.

### Example 36

A concrete member of 40 mm thickness, 40 mm width and 160 mm length was produced in the same manner as in Example 31. The reinforcing body was dried at a temperature of 80°C and thereafter was coated with epoxy resin on the surface thereof except for the surface of reinforcing body. After the thus obtained concrete member was immersed in water for one month, the water absorption thereof was measured. After that, it was immersed in a solution of 5% hydrochloric acid and the state of erosion was observed. The conventional concrete member having no reinforcing body of the invention provided therein was tested in the same manner.

As the result of the test, the water absorption of the concrete member of Example 36 was 0.5% and the erosion of the surface thereof was not found after it was immersed in the solution of 5% hydrochloric acid. On the other hand, the conventional concrete member formed of only concrete produced on the same conditions had water absorption of 3.4% and the paste of the conventional member was corroded after it was immersed in a solution of 5% hydrochloric acid. The conventional concrete member had the rough surface provided thereon.

As noted from Examples 31 to 36, the concrete member of the invention had higher flexural strength and as a result the reduced cross section and the light weight thereof were obtained. In addition thereto, it had durabilities such as water tightness, chemical resistance and weather resistance or salt damage resistance.

The concrete member of the invention can be applied to materials for a construction field such as footing, pillar, beam, floor materials, external wall materials, interior finishing material, materials for civil engineering field such as canal, bridge, paving material, tunnel, tank and railing tie, materials for machinery field such as a base for machine tool, press die or the likes.

## Claims

1. Cement including composite material comprising at least one kind of hydraulic cement and a substantially anhydrous formaldehyde resin precursor, said formaldehyde resin precursor generating water by heat curing reaction, and further comprising a polymeric modifier which contains an amide group, wherein said composite material has a flexural strength of greater than 40 N/mm².

2. Cement including composite material as set forth in claim 1, wherein said formaldehyde resin precursor is blended with a ratio of 10 to 60 weight parts relative to 100 weight parts of said hydraulic cement.

3. Cement including composite material as set forth in claim 2, wherein said formaldehyde resin precursor is blended with a ratio of 12 to 30 weight parts relative to 100 weight parts of said hydraulic cement.

4. Cement including composite material as set forth in any one of claims 1 to 3, wherein said formaldehyde resin precursor is any one of a phenol resin precursor, a melamine precursor, or a urea resin precursor.

5. Cement including composite material as set forth in any one of claims 1 to 4, wherein said polymeric modifier is a polyamide or a polyacrylamide.

6. Cement including composite material as set forth in any one of claims 1 to 4, wherein said polymeric modifier is a fatty acid alcohol soluble polyamide.

7. Cement including composite material as set forth in any one of claims 1 to 4, wherein said polymeric modifier is a polyvinylalcohol.

8. Cement including composite material as set forth in any one of claims 1 to 7, further comprising filler.

9. Cement including composite material as set forth in any one of claims 1 to 8, wherein said polymeric modifier is blended with a ratio of 0.5 to 20 weight parts relative to 100 weight parts of said formaldehyde resin precursor.

10. Cement including composite material as set forth in any one of claims 1 to 9, wherein said polymeric modifier is blended with a ratio of 2 to 12 weight parts relative to 100 weight parts of said formaldehyde resin precursor.

11. Cement product characterised in that it is formed by curing cement as claimed in any one of claims 1 to 10.

12. A cement including composite material as set forth in any one of claims 1 to 10, when for use as a moulding material.

13. A cement including composite material as set forth in claim 12, wherein said formaldehyde resin precursor is blended with a ratio of 5 to 100 weight parts relative to 100 weight parts of said hydraulic cement.

14. A cement including composite material as set forth in claim 12, wherein said formaldehyde resin precursor is blended with a ratio of 7 to 60 weight parts relative to 100 weight parts of said hydraulic cement.

15. A cement including composite material as set forth in any one of claims 12 to 14, wherein said composite is mixed in the form of powder.

16. A cement including composite material as set forth in any one of claims 12 to 14, wherein said composite is mixed in the thermally molten form of said formaldehyde resin precursor.

17. A cement including composite material as set forth in claim 16, wherein said composite is ground and classified.

18. A cement including composite material as set forth in any one of claims 12 to 14, wherein said composite is mixed in the form of alcohol solution of said formaldehyde resin precursor.

19. A cement including composite material as set forth in claim 18, wherein said composite with said alcohol evaporated is ground and classified.

20. A cement including composite material as set forth in any one of claims 12 to 19, wherein said polymeric modifier is a polymer having acid-amide bonding included therein.

21. A method of producing moulding material as claimed in any one of claims 12 to 20 comprising the step of mixing the composite and curing the composite whilst generating water by the curing reaction.

22. Mould goods obtained by moulding, heating and curing moulding material as claimed in any one of claims 12 to 20.

23. A concrete member comprising a concrete body (2) and at least one reinforcing body (3) integrally provided with said concrete body, said reinforcing body comprising a cement as claimed in any one of claims 1 to 11.

24. A concrete member as set forth in claim 23, wherein said reinforcing body is attached to said concrete body.

25. A concrete member as set forth in claim 23, wherein said reinforcing body is provided in said concrete body.

26. A method of producing a concrete member comprising the steps of;
forming at least one reinforcing body comprising a cement as claimed in any one of claims 1 to 11;
placing said reinforcing body in a mould (4; 5);
and placing and curing freshly mixed concrete in said mould to form said concrete member.

## Patentansprüche

1. Zement, einschließlich Verbundmaterial, das mindestens eine Art von hydraulischem Zement und einen wesentlich wasserlosen Formaldehydharzvorläufer enthält, wobei dieser Formaldehydharzvorläufer durch eine wärmeaushärtende Reaktion Wasser erzeugt, und das ferner einen polymerischen Modifizierer enthält, der eine Amidgruppe enthält, wobei dieses Verbundmaterial eine Biegesteifigkeit von mehr als 40 N/mm² hat.

2. Zement, einschließlich Verbundmaterial, wie in Anspruch 1 dargestellt, wobei dieser Formaldehydharzvorläufer in einem Verhältnis von 10 zu 60 Gewichtsanteilen in bezug auf 100 Gewichtsanteile dieses hydraulischen Zements gemischt wird.

3. Zement, einschließlich Verbundmaterial, wie in Anspruch 2 dargestellt, wobei dieser Formaldehydharzvorläufer in einem Verhältnis von 12 zu 30 Gewichtsanteilen in bezug auf 100 Gewichtsanteile dieses hydraulischen Zements gemischt wird.

4. Zement, einschließlich Verbundmaterial, wie in einem der Ansprüche 1 bis 3 dargestellt, wobei dieser Formaldehydharzvorläufer ein beliebiger Phenolharzvorläufer, ein Melaminvorläufer oder ein Harnstoffharzvorläufer ist.

5. Zement, einschließlich Verbundmaterial, wie in einem der Ansprüche 1 bis 4 dargestellt, wobei dieser polymerische Modifizierer ein Polyamid oder Polyacrylamid ist.

6. Zement, einschließlich Verbundmaterial, wie in einem der Ansprüche 1 bis 4 dargestellt, wobei dieser polymerische Modifizierer ein in Fettsäurealkohol lösliches Polyamid ist.

7. Zement, einschließlich Verbundmaterial, wie in einem der Ansprüche 1 bis 4 dargestellt, wobei dieser polymerische Modifizierer Polyvinylaikohol ist.

8. Zement, einschließlich Verbundmaterial, wie in einem der Ansprüche 1 bis 7 dargestellt, der ferner einen Füllstoff enthält.

9. Zement, einschließlich Verbundmaterial, wie in einem der Ansprüche 1 bis 8 dargestellt, wobei dieser polymerische Modifizierer in einem Verhältnis von 0,5 zu 20 Gewichtsanteilen in bezug auf 100 Gewichtsanteile dieses Formaldehydharzvorläufers gemischt wird.

10. Zement, einschließlich Verbundmaterial, wie in einem der Ansprüche 1 bis 9 dargestellt, wobei dieser polymerische Modifizierer in einem Verhältnis von 2 zu 12 Gewichtsanteilen in bezug auf 100 Gewichtsanteile dieses Formaldehydharzvorläufers gemischt wird.

11. Zementprodukt, dadurch gekennzeichnet, daß es durch Aushärten von Zement gemäß einem der Ansprüche 1 bis 10 gebildet wird.

12. Ein Zement, einschließlich Verbundmaterial, wie in einem der Ansprüche 1 bis 10 dargestellt, wenn er als Formmaterial verwendet wird.

13. Ein Zement, einschließlich Verbundmaterial, wie in Anspruch 12 dargestellt, wobei dieser Formaldehydharzvorläufer in einem Verhältnis von 5 zu 100 Gewichtsanteilen in bezug auf 100 Gewichtsanteile dieses hydraulischen Zements gemischt wird.

14. Ein Zement, einschließlich Verbundmaterial, wie in Anspruch 12 dargestellt, wobei dieser Formaldehydharzvorläufer in einem Verhältnis von 7 zu 60 Gewichtsanteilen in bezug auf 100 Gewichtsanteile dieses hydraulischen Zements gemischt wird.

15. Ein Zement, einschließlich Verbundmaterial, wie in einem der Ansprüche 12 bis 14 dargestellt, wobei dieses Verbundmaterial pulverförmig ist.

16. Ein Zement, einschließlich Verbundmaterial, wie in einem der Ansprüche 12 bis 14 dargestellt, wobei dieses Verbundmaterial in thermisch geschmolzener Form dieses Formaldehydharzvorläufers gemischt wird.

17. Ein Zement, einschließlich Verbundmaterial, wie in Anspruch 16 dargestellt, wobei dieses Verbundmaterial gemahlen und klassiert wird.

18. Ein Zement, einschließlich Verbundmaterial, wie in einem der Ansprüche 12 bis 14 dargestellt, wobei dieses Verbundmaterial in Form einer Alkohollösung dieses Formaldehydharzvorläufers gemischt wird.

19. Ein Zement, einschließlich Verbundmaterial, wie in Anspruch 18 dargestellt, wobei dieses Verbundmaterial nach dem Verdampfen dieses Alkohols gemahlen und klassiert wird.

20. Ein Zement, einschließlich Verbundmaterial, wie in einem der Ansprüche 12 bis 19 dargestellt, wobei dieser polymerische Modifizierer ein Polymer mit einer darin eingeschlossenen Säureamidverbindung ist.

21. Ein Verfahren zur Herstellung von Formmaterial gemäß einem der Ansprüche 12 bis 20, das den Schritt des Mischens des Verbundmaterials und des Aushärtens des Verbundmaterials enthält, während durch die Aushärtungsreaktion Wasser erzeugt wird.

22. Formwaren, die durch Formen, Erwärmen und Aushärten von Formmaterial gemäß einem der Ansprüche 12 bis 20 erhalten werden.

23. Ein Zementbauelement, das aus einem Zementkörper (2) und mindestens einem Verstärkungskörper (3) besteht, der mit diesem Zementkörper integral vorgesehen ist, wobei dieser Verstärkungskörper einen Zement gemäß einem der Ansprüche 1 bis 11 enthält.

24. Ein Zementbauelement, wie in Anspruch 23 dargestellt, wobei dieser Verstärkungskörper an diesem Zementkörper befestigt ist.

25. Ein Zementbauelement, wie in Anspruch 23 dargestellt, wobei dieser Verstärkungskörper in diesem Zementkörper vorgesehen ist.

26. Ein Verfahren zur Herstellung eines Zementbauelementes, das die folgenden Schritte enthält.
Formen mindestens eines Verstärkungskörpers, der einen Zement gemäß einem der Ansprüche 1 bis 11 enthält;
Einsetzen dieses Verstärkungskörpers in eine Form (4; 5);
und Einfüllen und Aushärten von frisch gemischtem Zement in diese Form, um dieses Zementbauelement zu formen.

## Revendications

1. Matériau composite contenant du ciment, comprenant au moins un type de ciment hydraulique et un précurseur de résine de formaldéhyde essentiellement anhydre, ledit précurseur de résine de formaldéhyde produisant de l'eau par une réaction de cure à chaud, et comprenant en outre un modifiant polymère, qui contient un groupe amide, où ledit matériau composite a une résistance à la flexion supérieure à 40 N/mm².

2. Matériau composite contenant du ciment selon la revendication 1, dans lequel ledit précurseur de résine de formaldéhyde est mélangé selon un rapport de 10 à 60 parties en poids pour 100 parties en poids dudit ciment hydraulique.

3. Matériau composite contenant du ciment selon la revendication 2, dans lequel ledit précurseur de résine de formaldéhyde est mélangé selon un rapport de 12 à 30 parties en poids pour 100 parties en poids dudit ciment hydraulique.

4. Matériau composite contenant du ciment selon l'une quelconque des revendications 1 à 3, dans lequel ledit précurseur de résine de formaldéhyde est un précurseur quelconque choisi parmi un précurseur de résine phénolique, un précurseur de résine de mélamine et un précurseur de résine d'urée.

5. Matériau composite contenant du ciment selon l'une quelconque des revendications 1 à 4, dans lequel ledit modifiant polymère est un polyamide ou un polyacrylamide.

6. Matériau composite contenant du ciment selon l'une quelconque des revendications 1 à 4, dans lequel ledit modifiant polymère est un polyamide soluble dans les acides et alcools gras.

7. Matériau composite contenant du ciment selon l'une quelconque des revendications 1 à 4, dans lequel ledit modifiant polymère est un poly(alcool vinylique).

8. Matériau composite contenant du ciment selon l'une quelconque des revendications 1 à 7, qui comprend en outre une charge.

9. Matériau composite contenant du ciment selon l'une quelconque des revendications 1 à 8, dans lequel ledit modifiant polymère est mélangé selon un rapport de 0,5 à 20 parties en poids pour 100 parties en poids dudit précurseur de résine de formaldéhyde.

10. Matériau composite contenant du ciment selon l'une quelconque des revendications 1 à 9, dans lequel ledit modifiant polymère est mélangé selon un rapport de 2 à 12 parties en poids pour 100 parties en poids dudit précurseur de résine de formaldéhyde.

11. Produit de ciment, caractérisé en ce qu'il est formé par cure d'un ciment selon l'une quelconque des revendications 1 à 10.

12. Matériau composite contenant du ciment selon l'une quelconque des revendications 1 à 10, quand il est destiné à une utilisation en tant que matériau à mouler.

13. Matériau composite contenant du ciment selon la revendication 12, dans lequel ledit précurseur de résine de formaldéhyde est mélangé selon un rapport de 5 à 100 % en poids pour 100 parties en poids dudit ciment hydraulique.

14. Matériau composite contenant du ciment selon la revendication 12, dans lequel ledit précurseur de résine de formaldéhyde est mélangé selon un rapport de 7 à 60 parties en poids pour 100 parties en poids dudit ciment hydraulique.

15. Matériau composite contenant du ciment selon l'une quelconque des revendications 12 à 14, dans lequel ledit composite est mélangé sous forme d'une poudre.

16. Matériau composite contenant du ciment selon l'une quelconque des revendications 12 à 14, dans lequel ledit composite est mélangé sous une forme fondue à chaud dudit précurseur de résine de formaldéhyde.

17. Matériau composite contenant du ciment selon la revendication 16, dans lequel ledit composite est broyé et classé.

18. Matériau composite contenant du ciment selon l'une quelconque des revendications 12 à 14, dans lequel ledit composite est mélangé sous forme d'une solution alcoolique dudit précurseur de résine de formaldéhyde.

19. Matériau composite contenant du ciment selon la revendication 18, dans lequel ledit composite, après évaporation dudit alcool, est broyé et classé.

20. Matériau composite contenant du ciment selon l'une quelconque des revendications 12 à 19, dans lequel ledit modifiant polymère est un polymère dans lequel se trouve une liaison acide-amide.

21. Procédé de production d'un matériau à mouler selon l'une quelconque des revendications 12 à 20, qui comprend l'étape consistant à mélanger le composite et à provoquer la cure du composite tout en produisant de l'eau par la réaction de cure.

22. Objets moulés obtenus par moulage, chauffage et cure du matériau à mouler selon l'une quelconque des revendications 12 à 20.

23. Pièce en béton comprenant un corps de béton (2) et au moins un corps de renforcement (3), solidaire dudit corps de béton, ledit corps de renforcement comprenant un ciment selon l'une quelconque des revendications 1 à 11.

24. Pièce en béton selon la revendication 23, dans laquelle ledit corps de renforcement est fixé audit corps de béton.

25. Pièce en béton selon la revendication 23, dans laquelle ledit corps de renforcement est disposé dans ledit corps de béton.

26. Procédé de production d'une pièce de béton, comprenant les étapes consistant :
à former au moins un corps de renforcement comprenant un ciment selon l'une quelconque des revendications 1 à 11 ;
à placer ledit corps de renforcement dans un moule (4 ; 5) ;
et à placer et a soumettre à une cure le béton fraîchement mélangé dans ledit moule, pour former ladite pièce de béton.
